# FASCICULE DE BREVET EUROPEEN

(11) **EP 0 866 358 B1**
(45) Date de publication et mention de la délivrance du brevet: **06.10.2004**
(21) Numéro de dépôt: 98400611.4
(22) Date de dépôt: 16.03.1998
(51) Int. Cl.: G02F 1/35, H04B 10/18, H04L 7/027

(54) **Régénerateur à modulation optique pour des systèmes de transmission à fibre optique à signaux solitons**
Regenerator mit optischer Modulation für faseroptische Solitonenübertragungssysteme
Regenerator with optical modulation for fiber optic soliton transmission systems

(30) Priorité: 20.03.1997 FR 9703415
(43) Date de publication de la demande: 23.09.1998
(73) Titulaire: ALCATEL, 75008 Paris (FR)
(72) Inventeur: Bigo, Sébastien, 91120 Palaiseau (FR)
(74) Mandataire: Lamoureux, Bernard

(56) Documents cités:
- EP-A- 0 718 992
- NAKAZAWA M ET AL: "NOLM OSCILLATOR AND ITS INJECTION LOCKING TECHNIQUE FOR TIMING CLOCK EXTRACTION AND DEMULTIPLEXING" ELECTRONICS LETTERS, vol. 32, no. 12, 6 juin 1996, page 1122/1123 XP000620714

## Description

La présente invention a pour objet un régénérateur à modulation optique distribuée pour un système de transmission à impulsions solitons, et plus particulièrement

L'invention concerne aussi procédé de régénération d'un signal solitons par modulation optique distribuée.

Enfin, elle concerne un système de transmission comprenant un tel régénérateur.

La transmission d'impulsions solitons ou solitons est un phénomène connu. Ces impulsions sont des impulsions RZ de largeur temporelle (FWHM) faible par rapport au temps bit, qui présentent une relation déterminée entre la puissance, la largeur spectrale et la largeur temporelle, et qui se propagent généralement dans la partie à dispersion anormale d'une fibre optique. L'évolution de l'enveloppe d'une telle impulsion soliton dans une fibre monomode peut être modélisée par l'équation de Schrödinger non linéaire; la propagation repose sur un équilibre entre la dispersion de la fibre et sa non-linéarité.

Divers effets limitent la transmission de telles impulsions, comme la gigue induite par l'interaction des solitons avec le bruit présent dans le système de transmission, décrite par exemple dans l'article de J. P. Gordon et H. A. Haus, Optical Letters, vol. 11 n° 10 pages 665-667. Cet effet, appelé effet Gordon-Haus, impose une limite théorique à la qualité ou au débit des transmissions par solitons. Pour arriver à dépasser cette limite, il est possible d'utiliser une modulation synchrone des signaux solitons, par un signal d'horloge ou horloge, pour corriger leur gigue temporelle. comme expliqué par exemple dans un article de H. Kubota, IEEE Journal of Quantum Electronics, vol. 29 n°7 (1994), p. 2189 et s.

Il a été proposé, pour assurer cette modulation synchrone, d'utiliser l'effet Kerr dans des modulateurs synchrones de phase. Ainsi, on peut utiliser pour la modulation de phase la fibre elle-même. Une présentation de S. Bigo, P. Brindel, O. Leclerc, aux Journées nationales de l'Optique guidée, 30 octobre 1996, à Nice (France), décrit une régénération d'un signal soliton par modulation de phase tout-optique. On superpose au signal soliton une horloge optique, qui imprime un déphasage non linéaire aux impulsions du signal soliton, en se copropageant avec elles dans une fibre optique dont un tronçon a été sélectionné de sorte à minimiser les effets du glissement entre le signal soliton et l'horloge optique. On pourra consulter T. Widdowson et al., Soliton shepherding : all optical active soliton control over global distances, IEE Electron. Letters, vol. 30 n° 12 p. 990 (1994).

Il a aussi été montré, voir S. Bigo, *Traitement de signal tout-optique pour la transmission à très haut débit de solitons par fibre optique,* Mémoire de thèse, Université de Besançon, 1996, qu'un modulateur tout-optique utilisant l'effet Kerr, tel qu'un NOLM ou une fibre, peut être considéré comme un modulateur sinusoïdal discret synchronisé avec le train de solitons, malgré le glissement ("walkoff") dû à la dispersion chromatique et les pertes, lorsque l'horloge utilisée est sinusoïdale, et que l'on ajuste le décalage temporel entre le signal à moduler et l'horloge.

Un des problèmes qui se pose dans le cas de la modulation synchrone de phase est celui de la synchronisation en phase de l'horloge et du signal soliton à régénérer. Dans un modulateur classique à semi-conducteur, cette synchronisation s'effectue classiquement par dérivation d'un signal dont l'intensité est représentative de la différence de phase entre le signal de modulation et les signaux à moduler. Une rétroaction est alors utilisée pour régler cette différence de phase. Cette solution n'est toutefois pas applicable pour des dispositifs de modulation optique distribuée de phase par effet Kerr, dans lesquels on ne dispose pas d'un signal dont l'intensité permette de déterminer la phase du signal de modulation.

La présente invention propose une solution originale et simple au problème de la synchronisation de l'horloge dans un dispositif de modulation optique de phase, et notamment de modulation optique de phase distribuée par effet Kerr. Elle permet, par un dispositif simple, d'obtenir un signal dont l'intensité est utilisable pour commander la synchronisation, par exemple dans une boucle à rétroaction; dans le cas d'une modulation optique de phase distribuée par effet Kerr, ce signal est représentatif du profil de phase non linéaire induite par le signal de modulation, intégré sur la longueur de modulation.

Plus précisément, l'invention propose un régénérateur pour système de transmissions à impulsions solitons, comprenant un dispositif de modulation optique du signal solitons à régénérer par une horloge optique, caractérisé en ce que le dispositif de modulation est compris dans un interféromètre, et par des moyens de synchronisation du signal solitons à régénérer et de l'horloge optique en fonction de l'intensité du signal de sortie de l'interféromètre.

Le dispositif de modulation peut être un dispositif de modulation de phase ou un modulateur à semi-conducteur. Le dispositif de modulation peut aussi être un dispositif de modulation optique distribuée, de préférence dans la fibre de transmission du système de transmission.

Dans un mode de réalisation, l'interféromètre est un interféromètre de Sagnac, de préférence un miroir non linéaire en boucle. Dans ce cas, l'interféromètre comprend avantageusement de la fibre à maintien de polansation.

De préférence, les moyens de synchronisation règlent la phase du signal d'horloge de sorte à maximiser l'intensité du signal de sortie de l'interféromètre. De préférence, le signal d'horloge est dérivé du signal soliton à régénérer.

L'invention propose aussi un système optique de transmission, comprenant au moins un tel régénérateur.

L'invention concerne enfin un procédé de régénération d'un signal solitons, comprenant :
- la modulation optique du signal solitons à régénérer par une horloge optique, dans un modulateur compris dans un interféromètre, et
- la synchronisation du signal solitons à régénérer et de l'horloge optique en fonction de l'intensité du signal de sortie de l'interféromètre.

La modulation est avantageusement une modulation de phase, de préférence une modulation optique distribuée. Dans un mode de mise en oeuvre, l'interféromètre est un interféromètre de Sagnac, de préférence un miroir non linéaire en boucle.

Dans un mode de mise en oeuvre du procédé, on assure la neutralité vis à vis de la biréfringence à l'aide de fibre à maintien de polarisation.

Avantageusement. la synchronisation s'effectue en réglant la phase du signal d'horloge de sorte à maximiser l'intensité du signal de sortie de l'interféromètre. On peut aussi prévoir une étape de dérivation du signal d'horloge à partir du signal soliton à régénérer.

D'autres caractéristiques et avantages de l'invention apparaîtront à la lecture de la description qui suit de modes de réalisation de l'invention, donnée à titre d'exemple et en référence aux dessins annexés qui montrent:
- figure 1 une représentation schématique de principe d'un premier mode de réalisation d'un régénérateur selon l'invention;
- figure 2 une représentation schématique de principe d'un deuxième mode de réalisation d'un régénérateur selon l'invention;
- figure 3 une représentation schématique de principe d'un troisième mode de réalisation d'un régénérateur selon l'invention.

L'invention propose de régénérer le signal solitons incident par modulation optique de phase à l'aide d'une horloge; le modulateur de phase est disposé dans un interféromètre, dont le signal de sortie est utilisable pour commander la synchronisation de l'horloge et du signal solitons. Dans un mode de réalisation préféré, la modulation optique est une modulation optique distribuée, dans une fibre de modulation. La fibre de modulation est comprise dans un interféromètre de Sagnac, et l'intensité du signal de sortie de l'interféromètre est ainsi représentative du profil de phase intégré sur toute la longueur de la fibre de modulation.

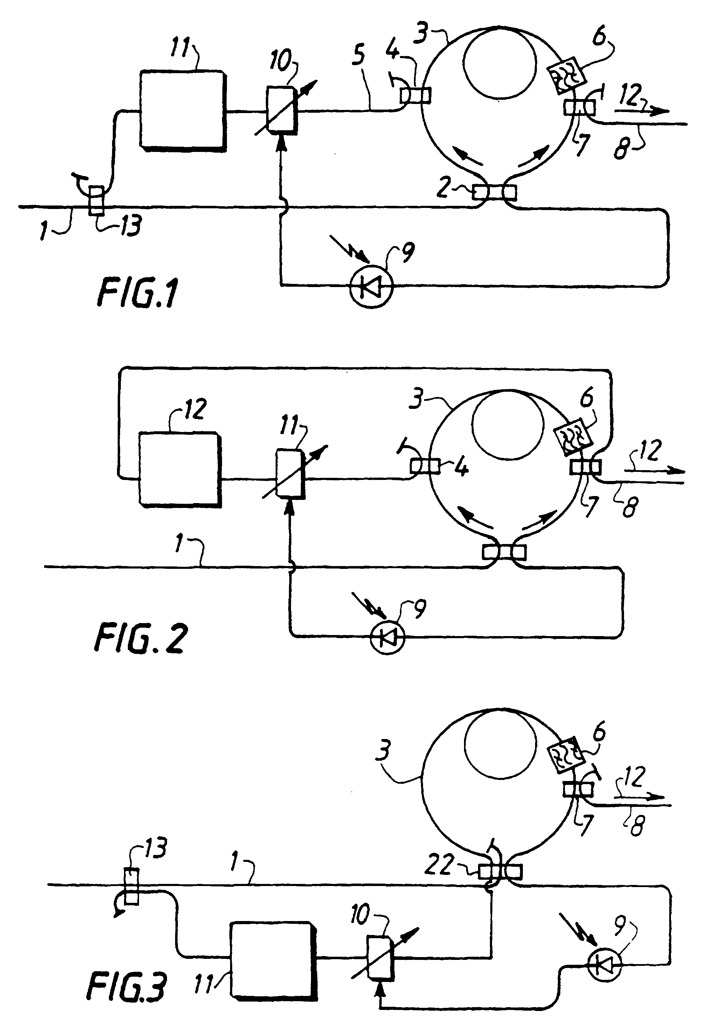

La figure 1 montre une représentation schématique de principe d'un régénérateur selon l'invention, fonctionnant selon ce principe. Dans le mode de réalisation de la figure 1, l'interféromètre de Sagnac est un miroir non-linéaire en boucle. Le régénérateur de la figure 1 comprend donc une fibre 1 sur laquelle arrive le signal solitons à régénérer; la fibre 1 est refermée par un premier coupleur 2/2, de taux de couplage η₁/1-η₁, de sorte à former un miroir non linéaire en boucle. La fibre 1 traverse une première fois le premier coupleur 2, puis une deuxième fois le premier coupleur 2. en sens inverse, de sorte à former un miroir non linéaire en boucle, avec une longueur 3 de fibre. En aval du premier coupleur 2. on trouve sur la fibre 3 un deuxième coupleur 4 qui couple dans la fibre 1 une horloge qu'il reçoit sur une fibre 5. On peut avantageusement utiliser pour le coupleur 4 un coupleur multiplexeur, qui permet d'obtenir des pertes minimum.

Cette horloge de modulation se copropage avec le signal soliton à régénérer sur une longueur de modulation de la fibre 1, sur laquelle il assure la modulation du signal solitons. En sortie de cette longueur de fibre, le régénérateur présente un filtre 6, qui filtre le signal d'horloge, et un troisième coupleur 7, qui extrait de la fibre 1 le signal soliton régénéré et le transmet sur une fibre 8. Le troisième coupleur 7 présente un taux de couplage η₂/1-η₂. La fibre 1 traverse ensuite à nouveau le premier coupleur 2, de sorte à former le miroir. En sortie du miroir, la fibre 1 est ensuite reliée à un convertisseur BF, par exemple une diode BF 9.

Le signal de sortie de la diode 9 est fourni à des moyens 10 de réglage de la phase de l'horloge. Dans le mode de réalisation de la figure 1, l'horloge est obtenue en prélevant une partie du signal soliton incident, à l'aide d'un quatrième coupleur 13, placé sur la fibre 1 avant le premier coupleur 2. Le signal prélevé est fourni à des moyens de récupération d'horloge 11; ceux-ci dérivent à partir du signal soliton un signal à la fréquence bit, qui est fourni aux moyens de réglage de phase 10.

Le fonctionnement du dispositif de la figure 1 est le suivant. Le signal soliton à régénérer arrive par la fibre 1 et pénètre dans le NOLM en traversant une première fois le premier coupleur 2. Il se sépare en deux signaux, qui se propagent à travers le NOLM dans les deux directions. Le signal se propageant depuis le premier coupleur 2 vers le deuxième coupleur 4, i.e. dans le sens des aiguilles d'une montre sur la figure est modulé par le signal d'horloge injecté dans le NOLM par le deuxième coupleur 4. Ce signal est modulé entre le deuxième coupleur 4 et le filtre 6, du fait de la copropagation dans la fibre du NOLM du signal à régénérer et de l'horloge. Le signal modulé est filtré par le filtre 6, qui bloque le signal d'horloge, et est ensuite extrait du NOLM par le troisième coupleur 7, de sorte à se propager sur la fibre 8, dans la direction indiquée par la flèche 12. Le signal modulé se transmet aussi depuis le troisième coupleur 7 vers le premier coupleur 2, et ressort du NOLM sur la fibre 1.

La partie du signal soliton incident extraite par le quatrième coupleur 13 est fournie au dispositif de récupération d'horloge 11, qui en extrait une horloge. On peut pour cela utiliser tout dispositif de récupération d'horloge connu en soi de l'homme du métier, comme par exemple un dispositif fondé sur un filtrage à fort facteur de qualité ou un dispositif à boucle à verrouillage de phase, opto-électronique ou optique.

Le signal de sortie du NOLM, sur la fibre 1 après que celle-ci a traversé une deuxième fois le premier coupleur 2, présente une intensité qui est représentative du profil de phase intégré sur la longueur de modulation. En d'autre termes, ce signal qui est le signal soliton régénéré, a une puissance moyenne d'autant plus importante que le signal à régénérer et l'horloge sont en phase. Le convertisseur BF 9 fournit donc un signal électronique de sortie dont l'intensité est représentative de l'efficacité de la modulation. Ce signal peut être utilisé pour piloter les moyens de réglage de phase 10. Ceux-ci peuvent comprendre des dispositifs connus en soi de l'homme du métier, comme un coin de cube placé à une distance variable d'une fibre, ou deux fibres en vis à vis mobiles l'un par rapport à l'autre, ou encore une bobine de fibre enroulée autour d'une cale piézo-électrique.

La figure 2 montre un deuxième mode de réalisation de l'invention. Le mode de réalisation de la figure 2 est analogue à celui de la figure 1; toutefois, le dispositif de récupération d'horloge ne reçoit pas une partie du signal soliton incident, mais un signal provenant du troisième coupleur 7. Dans le mode de réalisation de la figure 2, on prélève en sortie du troisième coupleur 7 une partie du signal soliton qui se propage du premier coupleur 2 vers le troisième coupleur 7, i.e. dans le sens inverse des aiguilles d'une montre sur la figure. Cette partie du signal est transmise vers le dispositif de récupération d'horloge sur la fibre 8, dans le sens opposé à la flèche 12.

La figure 3 montre un autre mode de réalisation de l'invention, dans lequel on utilise comme interféromètre une autre variante du NOLM. Le dispositif de la figure 3 est analogue à celui de la figure 1; toutefois, dans la figure 3, le premier coupleur d'entrée du NOLM est un coupleur 3/3 22; la fibre 1 entre dans le coupleur par la deuxième entrée, et en ressort par la troisième entrée. Le signal d'horloge est couplé dans le NOLM par la première entrée du coupleur 3/3. On évite ainsi de devoir prévoir le deuxième coupleur 4 de la figure 1. Les extrémités de la boucle du miroir sont reliées aux première et troisième sortie.

Dans ce cas, le dispositif de récupération d'horloge 11 fournit aussi une horloge à la fréquence bit. L'utilisation d'un tel montage permet aussi d'éviter le phénomène de doublement de fréquence induit par le miroir non linéaire en boucle, décrit par exemple dans S. Bigo et al., Electronics Letters, vol. 31 n° 25, p. 2191 (1995). Ce phénomène pourrait conduire à une incertitude de π sur la position temporelle relative de l'horloge et du signal.

Le fonctionnement du dispositif de la figure 3 est analogue à celui de la figure 1.

Dans les modes de réalisation des figures 1 à 3, la fibre de modulation est entièrement comprise dans l'interféromètre de Sagnac. Les dispositifs des figures 1 à 3 utilisent les propriétés du NOLM pour obtenir un signal permettant le pilotage de la phase de l'horloge. Ces dispositifs n'utilisent pas les propriétés du NOLM comme modulateur, dans la mesure où les dispositifs de modulation se trouvent entièrement compris dans l'interféromètre.

Dans les différents modes de réalisation décrits, il convient de préférence de contrôler la biréfringence dans le miroir non linéaire en boucle. Si l'on utilise une fibre de transmission classique, on peut prévoir des contrôleurs de polarisation, ou des lames biréfringentes dans le miroir. On pourrait aussi assurer l'équivalent d'une neutralité vis à vis de la biréfringence en utilisant dans le miroir non linéaire en boucle de la fibre à maintien de polarisation; on pourra à cet effet se rapporter à l'article de Uchiyama et al., Electronics Letters, vol. 28 n° 20, p. 1864 (1992).

Bien entendu, la présente invention n'est pas limitée aux exemples et modes de réalisation décrits et représentés, mais elle est susceptible de nombreuses variantes accessibles à l'homme de l'art. On pourrait ainsi utiliser dans le dispositif de la figure 3 le signal soliton extrait par le coupleur 7 pour la récupération de l'horloge, comme dans la figure 2, en prévoyant le cas échéant un filtre. Dans le dispositif de la figure 3, on pourrait aussi utiliser pour la récupération d'horloge le signal présent sur la sortie centrale du coupleur 3/3, de nouveau avec un filtre. On pourrait aussi, dans le montage de la figure 1 ou de la figure 2, utiliser un coupleur d'entrée 3/3 pour le NOLM, afin d'éviter le doublement de fréquence.

Il est aussi clair que l'invention n'est pas limitée au mode de réalisation préféré d'une modulation optique distribuée dans la fibre de modulation. On pourrait utiliser d'autres dispositifs de modulation de phase, comme par exemple un modulateur à semi-conducteur. L'invention n'est pas non plus limitée à une interféromètre de Sagnac, dont le miroir non-linéaire en boucle représente l'exemple le plus stable pour des longueurs de fibre de modulation importantes. On pourrait ainsi utiliser un interféromètre de Mach Zender, par exemple dans le cas où le modulateur est un modulateur à semi-conducteur. L'invention fournit dans un tel cas une alternative à l'utilisation du photocourant du modulateur pour piloter la modulation.

## Revendications

1. Un régénérateur pour système de transmissions à impulsions solitons, comprenant un dispositif de modulation optique (3) du signal solitons à régénérer par une horloge optique, **caractérisé en ce que** le dispositif de modulation est compris dans un interféromètre, et par des moyens de synchronisation (10) du signal solitons à régénérer et de l'horloge optique en fonction de l'intensité du signal de sortie de l'interféromètre.

2. Un régénérateur selon la revendication 1, **caractérisé en ce que** le dispositif de modulation est un dispositif de modulation de phase.

3. Un régénérateur selon la revendication 2, **caractérisé en ce que** le dispositif de modulation est un modulateur à semi-conducteur.

4. Un régénérateur selon la revendication 2, **caractérisé en ce que** le dispositif de modulation est un dispositif de modulation optique distribuée. de préférence dans la fibre de transmission (1) du système de transmission.

5. Un régénérateur selon l'une des revendications 1 à 4, **caractérisé en ce que** l'interféromètre est un interféromètre de Sagnac, de préférence un miroir non linéaire en boucle.

6. Un régénérateur selon la revendication 5, **caractérisé en ce que** l'interféromètre comprend de la fibre à maintien de polarisation.

7. Un régénérateur selon l'une des revendications 1 à 6, **caractérisé en ce que** les moyens de synchronisation (10) règlent la phase du signal d'horloge de sorte à maximiser l'intensité du signal de sortie de l'interféromètre.

8. Un régénérateur selon l'une des revendications 1 à 7, **caractérisé en ce que** le signal d'horloge est dérivé du signal soliton à régénérer.

9. Système optique de transmission, comprenant au moins un régénérateur selon l'une des revendications 1 à 8.

10. Un procédé de régénération d'un signal solitons, comprenant :
- la modulation optique du signal solitons à régénérer par une horloge optique, dans un modulateur compris dans un interféromètre, et
- la synchronisation du signal solitons à régénérer et de l'horloge optique en fonction de l'intensité du signal de sortie de l'interféromètre.

11. Un procédé selon la revendication 10, **caractérisé en ce que** la modulation est une modulation de phase, de préférence une modulation optique distribuée.

12. Un procédé selon la revendication 10 ou 11, **caractérisé en ce que** l'interféromètre est un interféromètre de Sagnac, de préférence un miroir non linéaire en boucle.

13. Un procédé selon la revendication 12, **caractérisé en ce que** l'on assure la neutralité vis à vis de la biréfringence à l'aide de fibre à maintien de polarisation.

14. Un procédé selon l'une des revendications 10 à 14, **caractérisé en ce que** la synchronisation s'effectue en réglant la phase du signal d'horloge de sorte à maximiser l'intensité du signal de sortie de l'interféromètre.

15. Un procédé selon l'une des revendications 10 à 14, **caractérisé par** une étape de dérivation du signal d'horloge à partir du signal soliton à régénérer.

## Claims

1. A regenerator for a soliton pulse transmission system, including a device (3) for optically modulating the soliton signal that is to be regenerated with an optical clock signal, the regenerator being **characterized in that** the modulator device is included in an interferometer, and by means (10) for synchronizing the soliton signal to be regenerated and the optical clock as a function of the intensity of the output signal from the interferometer.

2. A regenerator according to claim 1, **characterized in that** the modulator device is a phase modulator device.

3. A regenerator according to claim 2, **characterized in that** the modulator device is a semiconductor modulator.

4. A regenerator according to claim 2, **characterized in that** the modulator device is a distributed optical modulator device, preferably distributed in the transmission fiber (1) of the transmission system.

5. A regenerator according to any one of claims 1 to 4, **characterized in that** the interferometer is a Sagnac interferometer, preferably a non-linear optical loop mirror.

6. A regenerator according to claim 5, **characterized in that** the interferometer includes polarization-maintaining fiber.

7. A regenerator according to any one of claims 1 to 6, **characterized in that** the synchronization means (10) adjust the phase of the clock signal in such a manner as to maximize the intensity of the output signal from the interferometer.

8. A regenerator according to any one of claims 1 to 7, **characterized in that** the clock signal is derived from the soliton signal to be regenerated.

9. An optical transmission system comprising at least one regenerator according to any one of claims 1 to 8.

10. A method of regenerating a soliton signal, the method comprising:
optically modulating the soliton signal to be regenerated with an optical clock in a modulator contained within an interferometer; and
synchronizing the optical clock and the soliton signal to be regenerated as a function of the intensity of the output signal from the interferometer.

11. A method according to claim 10, **characterized in that** the modulation is phase modulation, preferably distributed optical phase modulation.

12. A method according to claim 10 or 11, **characterized in that** the interferometer is a Sagnac interferometer, preferably a non-linear optical loop mirror.

13. A method according to claim 12, **characterized in that** neutrality relative to birefringence is ensured by means of a polarization-maintaining fiber.

14. A method according to any one of claims 10 to 14, **characterized in that** synchronization is performed by adjusting the phase of the clock signal so as to maximize the intensity of the output signal from the interferometer.

15. A method according to any one of claims 10 to 14, **characterized by** a step of deriving the clock signal from the soliton signal to be regenerated.

## Patentansprüche

1. Regenerator für Solitonenübertragungssysteme, aufweisend eine optische Modulationsvorrichtung (3) des zu regenerierenden Solitonensignals durch ein optisches Taktsignal, **dadurch gekennzeichnet ist, dass** die Modulationsvorrichtung in einem Interferometer enthalten ist, sowie durch Synchronisationsvorrichtungen (10) des zu regenerierenden Solitonensignals und des optischen Taktsignals in Abhängigkeit von der Stärke des Interferometer-Ausgangssignals.

2. Regenerator nach Anspruch 1, **dadurch gekennzeichnet, dass** diese Modulationsvorrichtung eine Phasenmodulationsvorrichtung ist.

3. Regenerator nach Anspruch 2, **dadurch gekennzeichnet, dass** diese Modulationsvorrichtung ein Halbleiter-Modulator ist.

4. Regenerator nach Anspruch 2, **dadurch gekennzeichnet, dass** diese Modulationsvorrichtung eine Vorrichtung mit verteilter optischer Modulation ist, vorzugsweise in der Übertragungsfaser (1) des Übertragungssystems.

5. Regenerator nach einem der Ansprüche 1 bis 4, **dadurch gekennzeichnet, dass** das Interferometer ein Sagnac-Interferometer ist, vorzugsweise ein nichtlinearer Spiegel in Form einer Schleife.

6. Regenerator nach Anspruch 5, **dadurch gekennzeichnet, dass** das Interferometer eine Faser aufweist, deren Polarisation erhalten bleibt.

7. Regenerator nach einem der Ansprüche 1 bis 6, **dadurch gekennzeichnet, dass** die Synchronisationsvorrichtungen (10) die Phase des Taktsignals so regeln, dass die Stärke des Interferometer-Ausgangssignals maximiert wird.

8. Regenerator nach einem der Ansprüche 1 bis 7, **dadurch gekennzeichnet, dass** das Taktsignal von dem zu regenerierenden Solitonensignal abgeleitet wird.

9. Optisches Übertragungssystem, aufweisend mindestens einen Regenerator nach einem der Ansprüche 1 bis 8.

10. Regenerationsverfahren eines Solitonensignals, aufweisend:
- die optische Modulation des zu regenerierenden Solitonensignals durch ein optisches Taktsignal in einem in einem Interferometer enthaltenen Modulator; und
- die Synchronisation des zu regenerierenden Solitonensignals und des optischen Taktsignals in Abhängigkeit von der Stärke des Interferometer-Ausgangssignals.

11. Verfahren nach Anspruch 10, **dadurch gekennzeichnet, dass** die Modulation eine Phasenmodulation ist, vorzugsweise eine verteilte optische Modulation.

12. Verfahren nach Anspruch 10 oder 11, **dadurch gekennzeichnet, dass** das Interferometer ein Sagnac-Interferometer ist, vorzugsweise ein nichtlinearer Spiegel in Form einer Schleife.

13. Verfahren nach Anspruch 12, **dadurch gekennzeichnet, dass** die Neutralität gegenüber der Doppelbrechung mittels einer Faser gewährleistet wird, deren Polarisation erhalten bleibt.

14. Verfahren nach einem der Ansprüche 10 bis 14, **dadurch gekennzeichnet, dass** die Synchronisation dadurch erfolgt, dass die Phase des Taktsignals so geregelt wird, dass die Stärke des Interferometer-Ausgangssignals maximiert wird.

15. Verfahren nach einem der Ansprüche 10 bis 14, **gekennzeichnet durch** eine Stufe zur Ableitung des Taktsignals ausgehend von dem zu regenerierenden Solitonensignal.
